# EUROPEAN PATENT APPLICATION

(11) **EP 1 486 623 A1**
(43) Date of publication of application: **15.12.2004**
(21) Application number: 03013022.3
(22) Date of filing: 10.06.2003
(51) Int. Cl.: E03C 1/02, F16K 11/074

(54) **Multifunction tap**

(71) Applicant: Rubinetterie Fratelli Frattini S.P.A., 28017 San Maurizio d'Opaglio (IT)
(72) Inventor: Frattini, Maurizio, 28017 San Maurizio d'Opaglio (IT); Bertarelli, Paolo, 28017 San Maurizio d'Opaglio (IT)
(74) Representative: Lecce, Giovanni

(57) **Abstract**

A multifunction tap (10, 10') that can be installed to the downstream water supply and particularly suitable for shower cabins with spouts or multiple nozzles placed in different points and at different heights comprising a bell-shaped body (12,12') provided with independent ducts (14-16), (14'-16') respectively for the inlet of cold and warm water from the water system and of two or more mixed water outlet ducts (18, 18') whose flow can be adjusted, the water can be used for various, alternative or partially simultaneous purposes related to said spouts or multiple nozzles, said tap also integrates further mixing and thermostatic means (62-64), (62'-64') to adjust the temperature of the delivered water.

## Description

The present invention refers to a multifunction tap. More particularly, the present invention refers to a tap with many operation means that can be installed to the downstream water supply in order to alternatively deliver water for more uses and simultaneously adjusting its flow and temperature in a thermostatic way.

It is known that there are many kinds of taps that can be found, for instance, in domestic environments near sanitary installations; in addition to the traditional knob operation taps the so-called single lever mixers are spreading, they are made of one body wherein a cartridge with ceramic mobile small plates provided with openings that let the cold, warm or mixed water pass through is placed. The water is delivered through the movement of an operation rod determining the water and flow delivery and also the warm-cold mixing in order to obtain the required temperature.

According to a similar kind of embodiment, diverter taps have also been designed; they allow the alternative forwarding and delivery of water for different uses; this kind of taps wherein the warm-cold mixing is obtained by other independent means, are generally used in the so-called shower cabins that comprise many nozzles or spouts placed in different points and at different heights.

The cartridge inserted in these taps is provided with many orifices or outlets connecting to the spouts corresponding to the different uses through independent ducts; for the operation of these diverter taps two operation knobs or levers are provided; they respectively adjust the opening and the flow of water and allow diverting the flow to the required use.

It has been noticed that these mixer taps work, but show considerable drawbacks that are mainly related to installation and operation difficulties. In the known taps, the functions obtained are limited, i.e. the user can only open and close the water flow adjusting it and divert in a selective and alternative way the flow for the delivery in one defined point.

The additional and required mixing functions of cold and warm water with the subsequent stabilized adjustment of the delivered liquid, require the presence and the operation of other hydraulic units to be separately installed and connected to the diverter tap.

It can be easily understood that this need causes considerable difficulties both for installation and components. This results in an increase in start-up costs and maintenance/component replacement costs.

Moreover it must be noticed that, as far as the appearance is concerned, the presence of knobs or thermostatic mixers in addition to the diverter tap does not look so good inside the shower cabin and, moreover, the user needs to operate on many devices in order to open, divert and adjust the water flow and temperature.

Subject of the present invention is to solve the above-mentioned drawbacks.

More particularly, subject of the present invention is to provide a multifunction tap, particularly a shower cabin one, comprising in one body delivery, flow adjustment, thermostatic mixing, subsequent water temperature level and divertion of the flow to the spout or pre-selected use.

A further subject of the present invention is to provide a tap as defined above allowing the operation of said functions easily and quickly.

Another subject of the present invention is to provide a compact tap that can be installed without additional elements and therefore easily accessed for maintenance.

A further subject of the present invention is to provide the users with a multifunction tap that guarantees a high resistance and reliability level in time and is easily manufactured at low costs.

These and other objects are obtained by the multifunction tap of the present invention that can be installed to the downstream water supply and is particularly suitable for shower cabins with spouts or multiple nozzles placed in different points and at different heights that is mainly characterized in that it comprises a bell-shaped body provided with independent ducts respectively for the inlet of cold and warm water from the water system and of two or more mixed water outlet ducts whose flow can be adjusted, the water can be used for various, alternative or partially simultaneous purposes connected to said spouts or multiple nozzles, said tap also integrates further mixing and thermostatic means to adjust the temperature of he delivered water.

The building and functional features of the multifunction tap of the present invention can be better understood from the following description, wherein reference is made to the attached tables of drawings representing a preferred and non-limitative embodiment wherein:

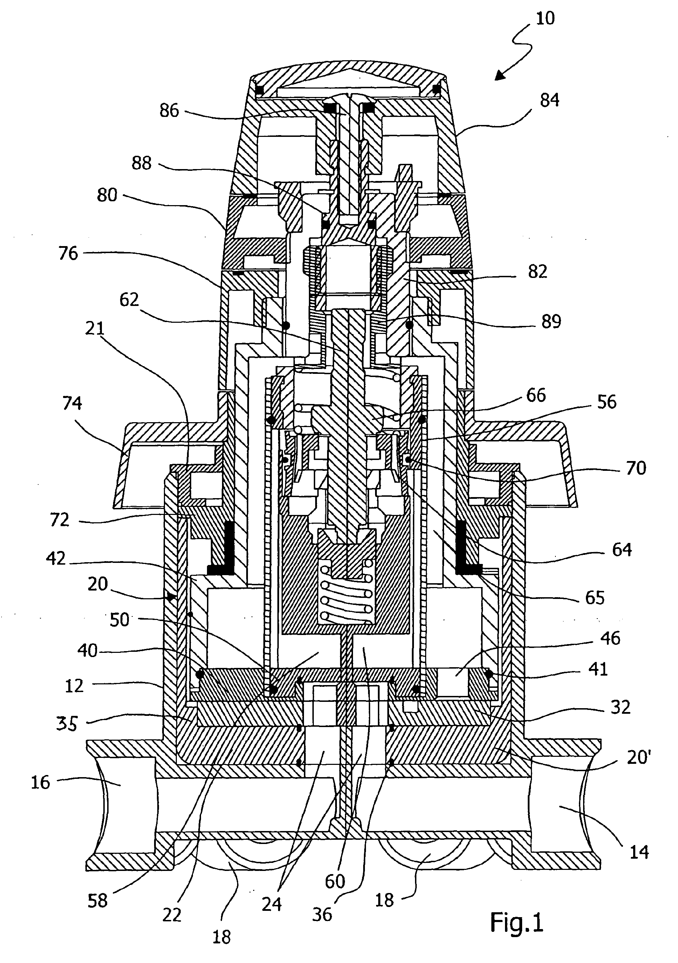

Figure 1 is a longitudinal schematic section view of the water inlet ducts of the body of the tap according to the present invention;

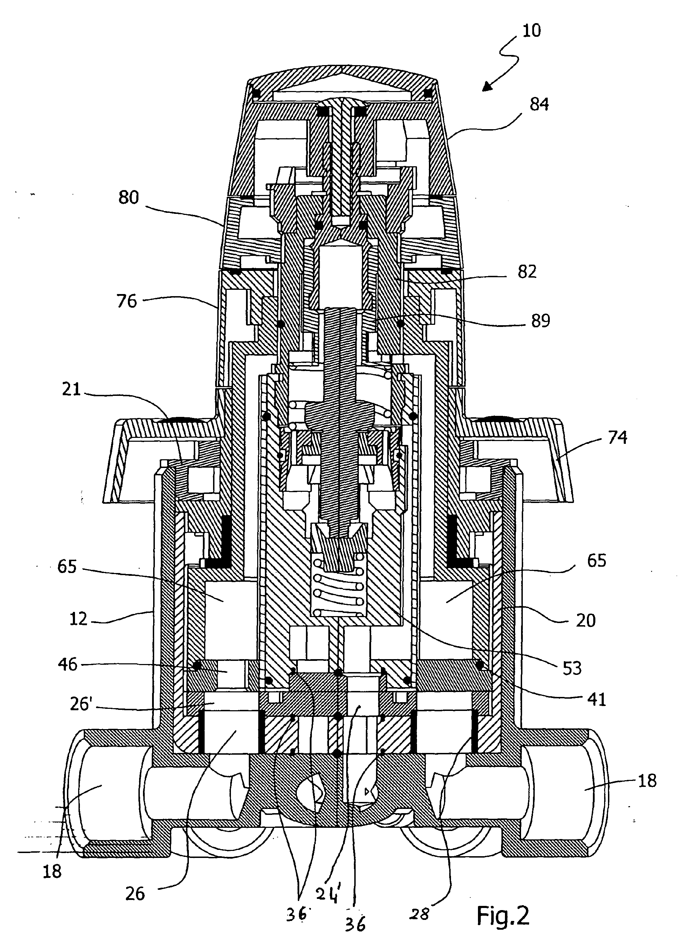

Figure 2 is a schematic longitudinal section view of the water outlet ducts of the same tap;
Figure 3 is a further schematic longitudinal section view of the same tap;

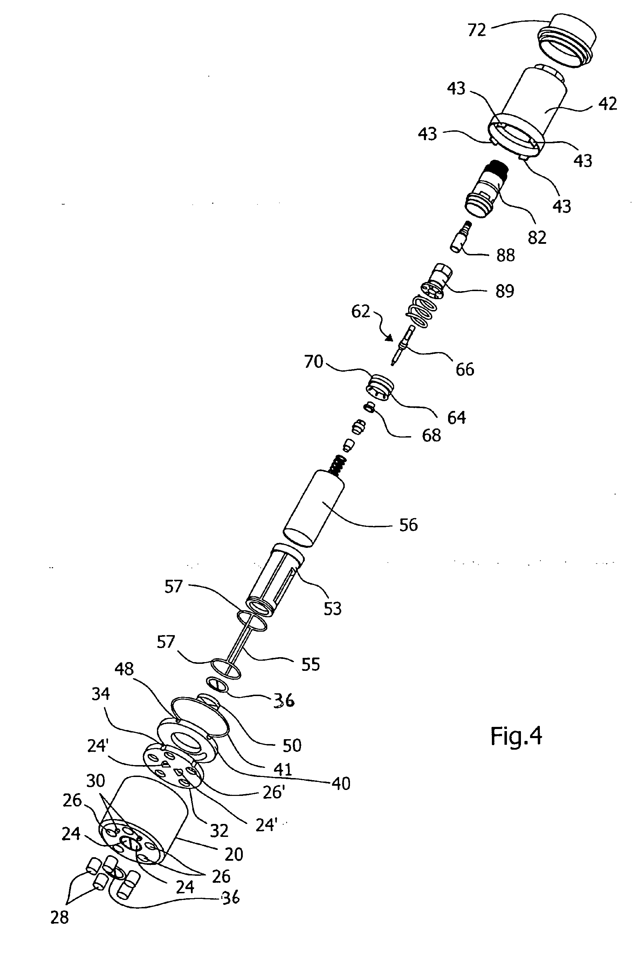

Figure 4 is an exploded schematic view of the cartridge included in the tap of the present invention;

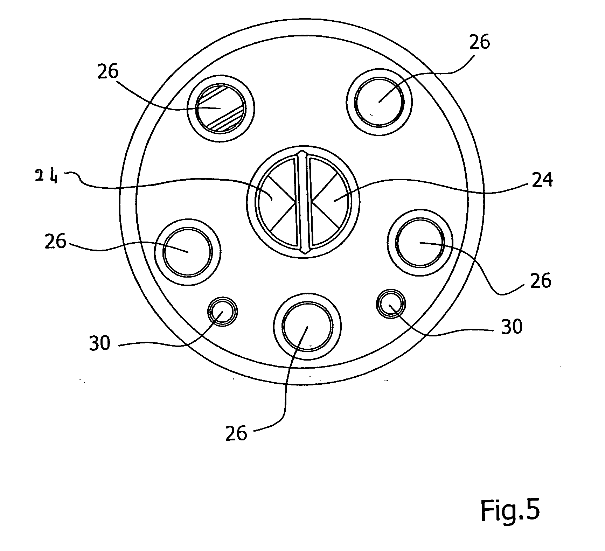

Figure 5 is a schematic view of the lower side of said cartridge;
Figure 6 is a schematic plan view of the small plates placed in the cartridge;
Figure 7 is an exploded schematic view of the small plates contained in the cartridge;

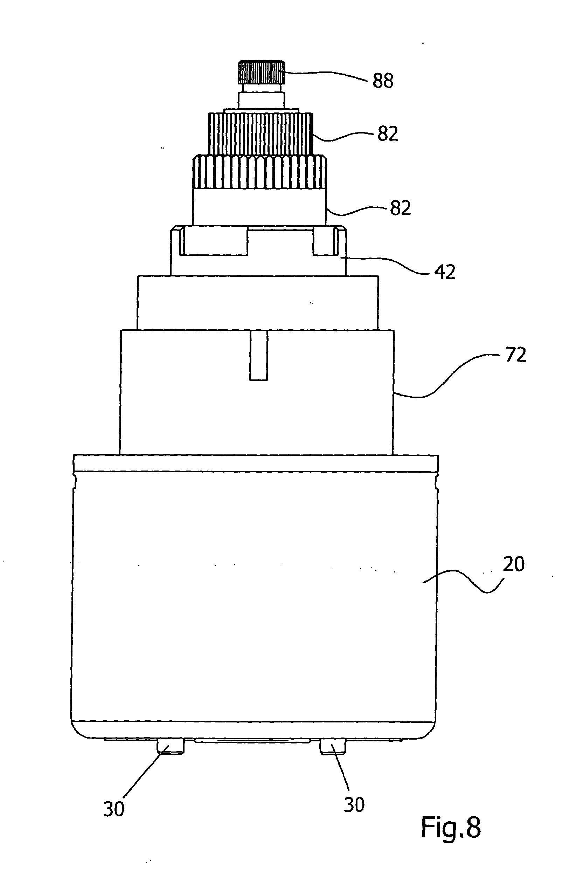

Figure 8 is a schematic side view of said cartridge assembled;

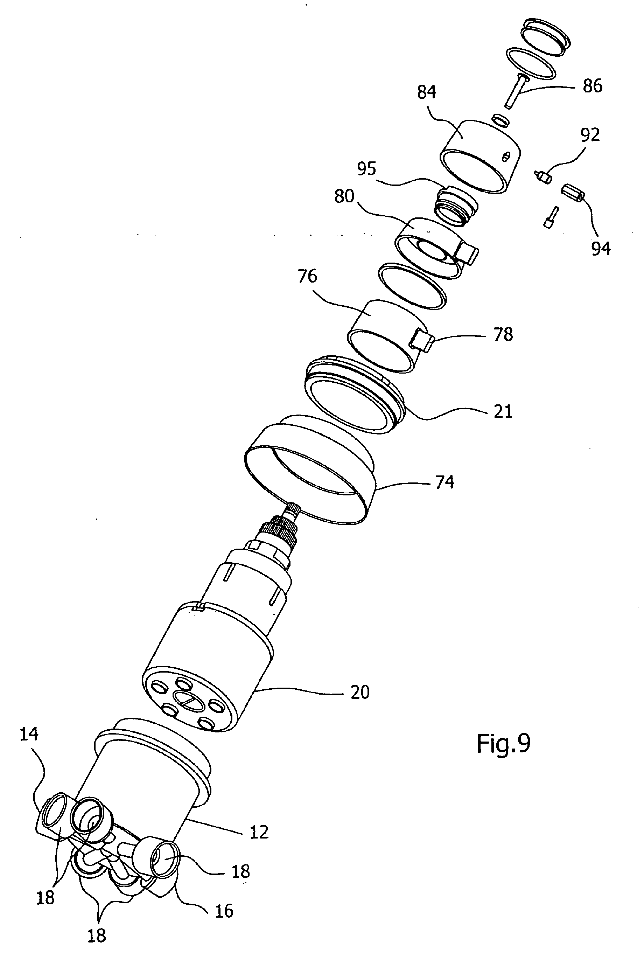

Figure 9 is an exploded schematic view of the whole tap of the present invention;
Figures from 10 to 19 refer to an alternative preferred embodiment of the tap of the present invention.

With reference to the above-mentioned figures, the multifunction tap of the present invention, marked in its whole with 10 in figures from 1 to 3, basically comprises a substantially bell-shaped body 12 that, in its lower part, is provided with a first cold water inlet duct 14, a second and opposite warm water duct 16 and of further mixed water outlet ducts 18 for various uses.

The embodiment given by way of example represented in the above-mentioned figures, five ducts 18 are provided, they are equidistant among them, radially oriented along the body 12 and spaced by cold and warm water inlet ducts 14-16 of the water supply. In the body 12, a cartridge 20 is coaxially inserted, its external diameter is equal to or slightly lower than the internal one of the same body 12; particularly, said body 12 houses the bottom element 20' of the cartridge 20 formed by a small glass made of plastic or other suitable material, provided with pass-through openings 24 in communication with the ducts 14-16 along the base 22. On the same base 22 of the element 20' of the cartridge 20 further pass-through openings 26 placed in a radial way and corresponding to the above-mentioned mixed water outlet ducts 18 for various uses are obtained. The openings 26 are usually provided with a seal 28. From the external side of the base 22 at least an integral projection or centering and positioning pin 30 fastened to the cartridge 20 in the body 12 protrudes, the latter provided in a parallel way with correspondent recesses.

In the bottom element or small glass 20' of the cartridge 20 a first small ceramic material or ceramized small plate 32 is placed and sized in such a way to steadily place and abut in contact with the internal side of the base 22 of said element 20'; for this purpose, the first small plate 32 is externally provided with one or more vertical recesses 34 matching with the correspondent projections 35 formed inside and outside the element 20' or small glass of the cartridge 20.

The first small plate 32 is provided with a plurality of central and external pass-through openings, whose shape, position and/or size are advantageously similar or equivalent to the openings 24 and 26 of the base 22 of the bottom element or small glass 20' of the cartridge 20; said openings of the small plate 32 are marked in a parallel way with 24' and 26'. One or more seals 36, shaped seals if necessary, guarantee the tightness between the base 22 of the bottom element 20' of the cartridge 20 and the openings 24 existing along the same base.

The first small plate 32 is associated to a second ceramic or ceramized small plate 40 whose whole size is similar to the previous one and to which it overlaps inside the small glass 20'.

Said second small plate 40 is shaped along its external side to house a cylindrical body 42 with varied and decreasing diameters from bottom to top of the tap 10, that is to say from the lower part including said small plates 32 and 40 towards the opposite and upper area.

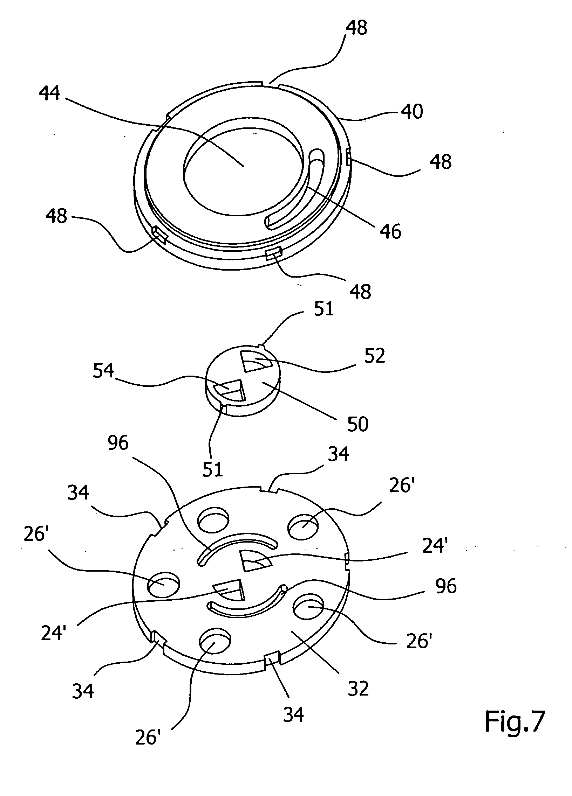

As shown in figure 7, the second small plate 40, in its central part is provided with a circular-shaped wide pass-through opening 44 that creates the housing seat for a third and smaller plate 50 described here below.

Outside the opening 44, on the same small plate 40, a shaped opening 46 is obtained; a plurality of equidistant recesses 48 is formed along the edge of the small plate 40 engaging with the base projections of the cylindrical body 42.

Said projections are marked with 43. The body 42, through the rotation of the knob 76 described here below, moves the small plate 40 in order to place the opening 46 in correspondence with the outlets 26' for the uses 18.

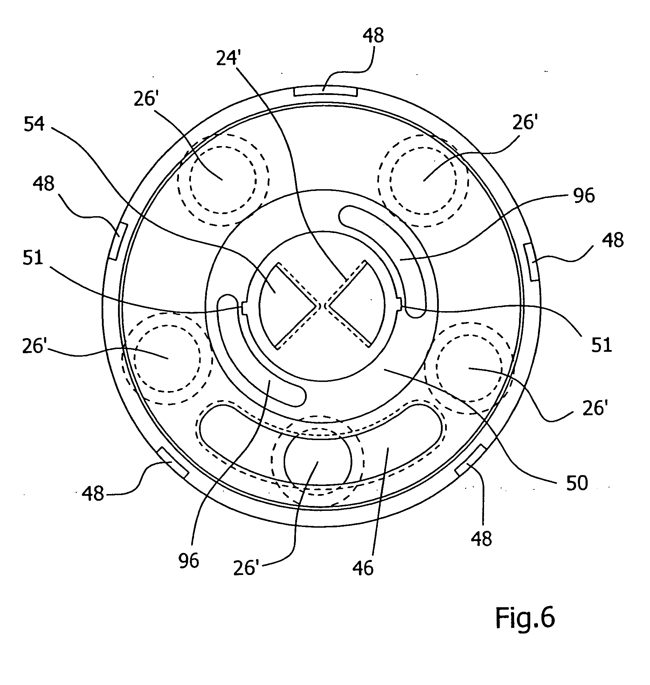

As it can be particularly noticed from figure 6, the opening 46 of the plate 40 sufficiently extends to reach one or two uses, i.e. to simultaneously overlap to two openings 26'. The third plate 50 is sized in such a way to abut in the opening 44 of the second plate 40 and it is centrally provided with two opposite shaped openings 52 and 54 that are identical or similar to the openings 24' of the first small plate 32. The third plate 50 can rotate in the opening 44 in order to open, close and adjust the warm and cold-water flow entering into the body-tap from the ducts 14-16. The third plate 50 is provided with one or more projections 51 protruding from the edge that should match with an element 53 described here below. The diameter of the third small plate 50 is remarkably lower than the one of the opening 44 housing also the base of a tubular body 56 developing in height until the upper mouthpiece of the cylindrical body 42.

The tubular body 56 defines and delimits two coupled ducts 58,60 in its inner part that are separated between them by an element 53 to which a seal 55 with two rings vertically connected between them in opposite positions is associated. The element 53 is a hollow cylindrical body and on its external surface two miters for the two rings of the seal 55 marked with 57 and two opposite vertically extended recesses or shaped cavities for the vertical connection branches of the same seal rings are obtained. Said vertical branches connecting the rings 57 of the seal 55 separate the external side surface of the element 53 in two separated pass-through sectors for the warm and the. cold water coming from the ducts 58 and 60.

In the centre of the hollow cylindrical body 53, a known thermostatic valve 62 comprising an equally known mixing valve 64 operated by a bulb 66 is placed. Said bulb is integral to the mixing valve 64 through a nut 68 or similar means. On the same valve 64, a seal or toric ring 70 is fitted into a suitable miter whose function is to keep the warm and hot water separated outside the same valve.

In its upper part the cartridge is closed by a lid 72, preferably an open top lid over which a cap 74 is fitted; a locking ring 21 locks and stabilizes the same cartridge complete with lid in the body 12. A first knob 76 provided with at least one integral protruding projection or lever 78 is fitted on the mouthpiece of the body 42 over the cap 74; a further or second knob 80 with a protruding projection 80', overlapped to the previous one, is fitted on the element 82 which is substantially constituted by a compaction element of the above-mentioned thermostatic valve 62 and engaged by thread 82' with the hollow cylindrical body 53. In its upper end, the body-tap 10 is delimited by a third screw-fastened knob 84 or the like to an operation lever 88; the operation lever 88 is integrated in the compaction element 82 and engages with the mobile component marked with 89 of the known thermostatic valve. The knob 84 is graduated and through it the selection of the temperature is obtained. Said knob 84 integrates an anti-rotation safety lock, comprising a pin 90 tensioned by a spring 92 by a protruding button 94; the safety lock is for example made of a shaped ring 95 and is set or positioned is such a way to correspond to a fixed temperature of the water, generally 38°C in order to avoid the casual delivery of very warm water.

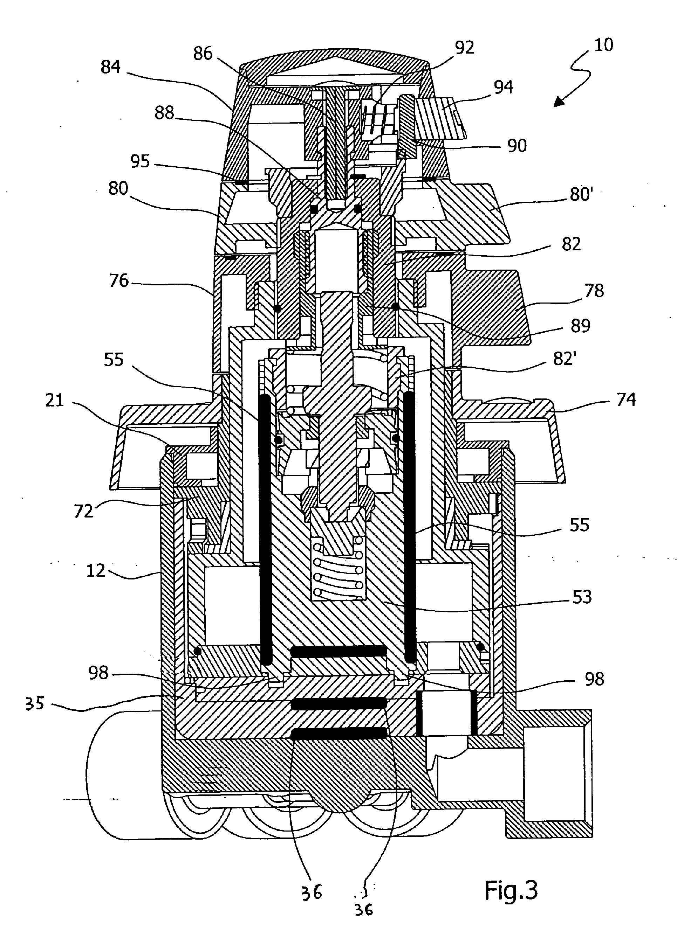

The opening, the closing and the water adjustment flow are obtained through the movement of the second knob 80, determining the simultaneous rotation of the first and of the second valve assembly, i.e. of the components formed by the third small plate 50 and by the thermostatic valve 62 on the first fixed small plate 32 to the extent of the stroke of a couple of opposite shaped slots 96 obtained on the first small plate 32 outside the openings 24' and by as many rotation lock pins integral with lower mouthpiece of the body 53; said pins are schematised in figure 3 with number 98.

The projections 51 of the small plate 50 engage in correspondent recesses (that are not represented) obtained at the lower mouthpiece of the body 53. The static tightness among the various components for the inlet of warm and cold water from the ducts 24 is advantageously obtained by seals 36; the tightness between the second small plate 40 and the cylindrical body 42 is equally obtained by a seal 41.

During the operation, the opening and closing of the water and the flow adjustment are obtained by simultaneously rotating the knobs 80 and 84 implying the rotation of the full block of the tubular body 56 and of all the elements thereof. With the openings 52 and 54, the third small plate 50 reaches the openings 24' of the first small plate 32 and 24 of the base of the cartridge 20 in communication with the inlets 14 and 16.

The mixing of warm and cold water in order to obtain the required temperature is carried out by the graduated knob 84 acting on the operation lever 88 by axially moving the mobile component of the thermostatic valve 62 and adjusting the mixing valve 64 in the known way through the bulb 66.

The warm and cold water coming from the ducts 24 goes up inside the tap 10 from the ducts 58, 60 and reaches the mixing valve 64 passing through the hollow body 53 and the tubular body 56 and flowing in the chamber marked with 65 and formed between the tubular body 56 and the cylindrical one 42. The mixed water pours out of the opening 46 of the second small plate 40, it crosses one or two of the openings 26' before the small plate 32 and also one or two of the openings 26 on the bottom element 20' of the cartridge 20 and it pours out of one or two ducts 18 corresponding to the same number of uses.

The first knob 76 with protruding projection 78 is connected to the cylindrical body 42 and its rotation determines the rotation of the second small plate 40, in order to change and pipe the outlet water to the various uses through the one or the other or, if necessary, the two ducts 18.

The rotation of the second small plate 40 takes place through the engagement of the above-mentioned projections 43 of the cylindrical body 42 with the corresponding recesses of the same plate marked with 48.

Figures from 10 to 19 refer to an alternative and preferred embodiment of the multifunction tap of the present invention; in said figures the same reference numbers of the previously described solution followed by an index are used for the common elements or parts thereof.

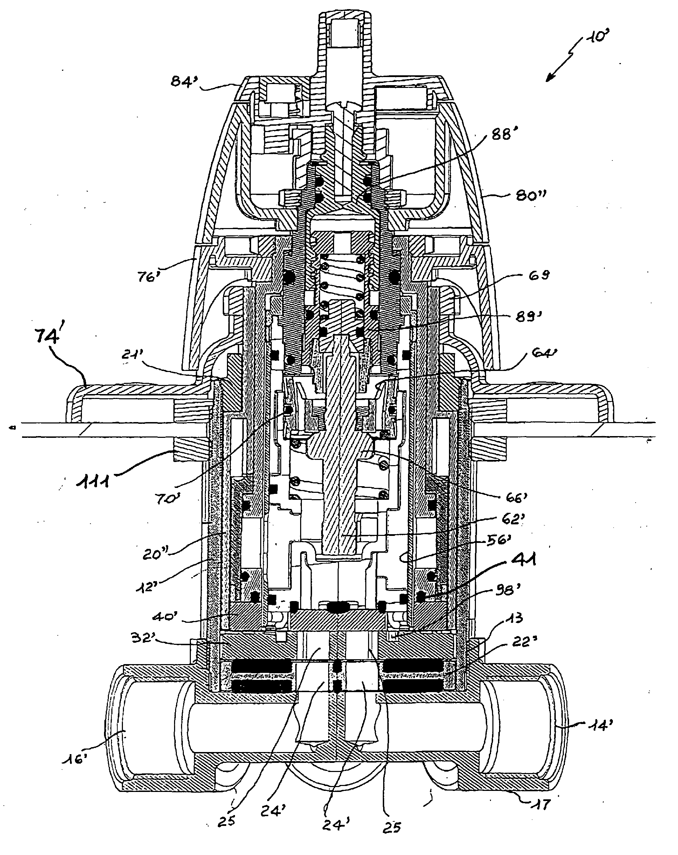

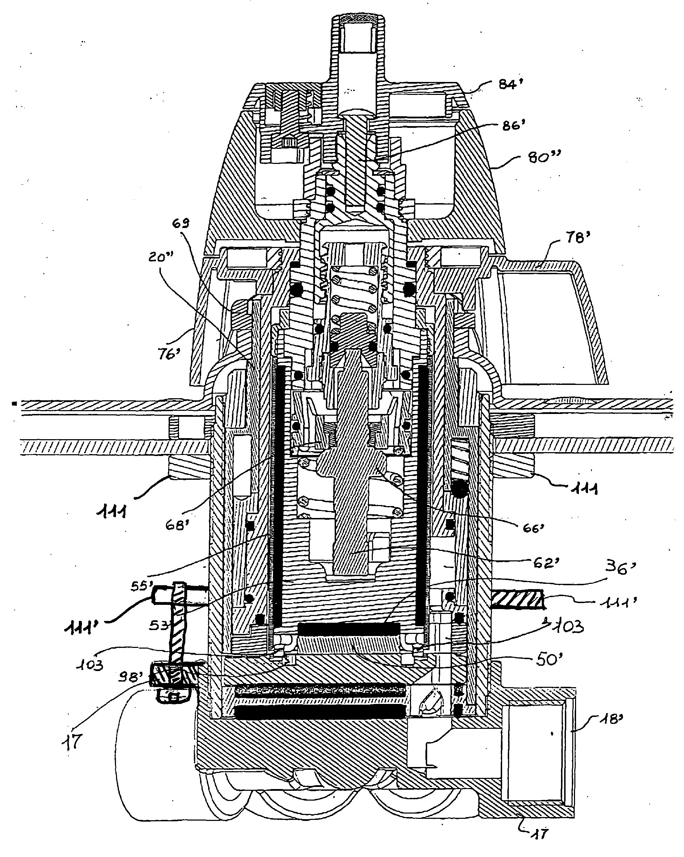

With reference to figure 10, the multifunction tap according to the above-mentioned alternative and preferred embodiment is marked in its whole with 10' and it comprises a sleeve-shaped body 12' wherein a coaxial element forming the envelope of the cartridge marked in its whole with 20" in figures 10 and 11 and it is made of a tubular body with varied diameters; the lower end of the body 12' facing the cold and warm water inlet ducts 14' and 16' is delimited by a small plate 22' made of plastic synthetic or other suitable material and overlapped by a first small ceramic or equivalent material small plate 32', provided with central shaped pass-through openings 25 whose shape, size and position are similar or equivalent to correspondent central openings 24' made on said small plate 22'.

The lower base or mouthpiece of the same body 12' is provided with external thread 13 to be fastened, by a complementary thread, to the base support of the tap marked with 17 integrating the warm and cold water inlet ducts 14' and 16' and the outlet ducts of the mixed water for the various uses marked with 18'.

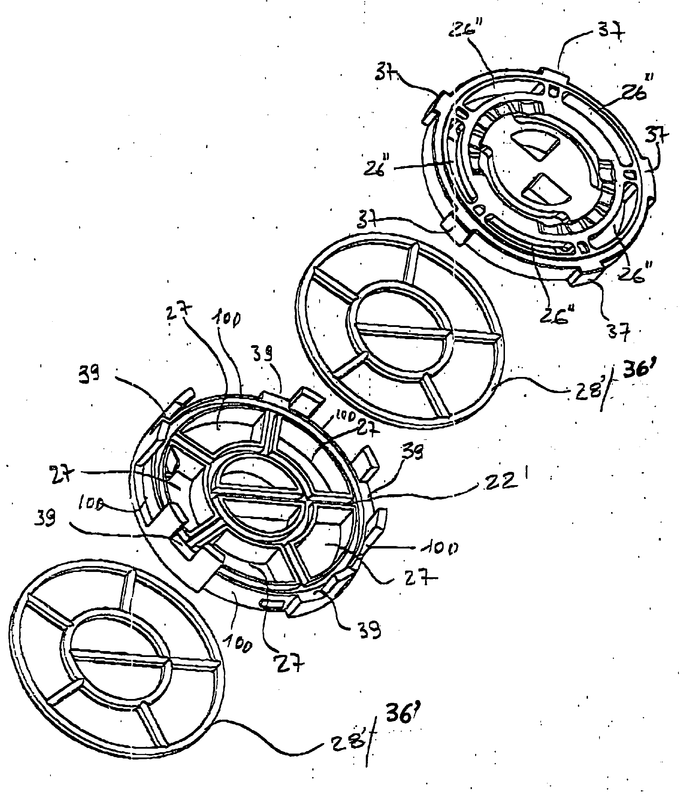

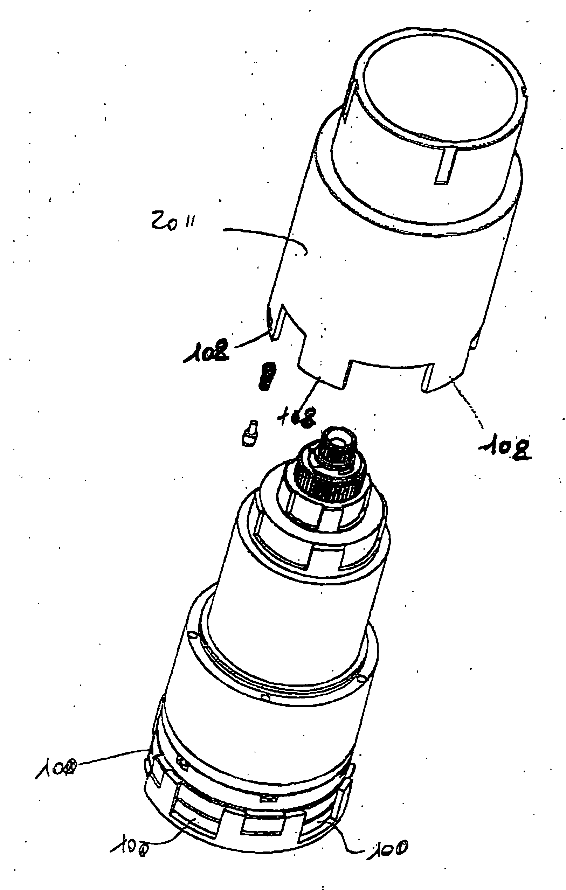

Said first small plate 32' is externally provided with further arc of circle-shaped pass-through openings 26" placed towards and in relation with similar openings obtained on the small plate 22' and marked with 27 in figure 14; the same small plate 32' shows, along the external band, a plurality of projected notches 37 matching with correspondent seats 39, schematised in figure 14 and obtained on the same small plate 22'. The latter is also provided with stubblings 100 with which correspondent notches 102 obtained along the lower base of the cartridge body 20" engage, as schematised in figure 15. Moreover, the first small plate 32' comprises a couple of slots 45, with a substantially semicircular profile, opposite between them and obtained in an intermediate position between said external openings 26" and central openings 25; the slots 45 form as many engagement and lock seats in rotation for the correspondent pins 98' integral to the lower base of a hollow cylindrical body 53', shown in figure 11 and hereby described housing a thermostatic valve 62'.

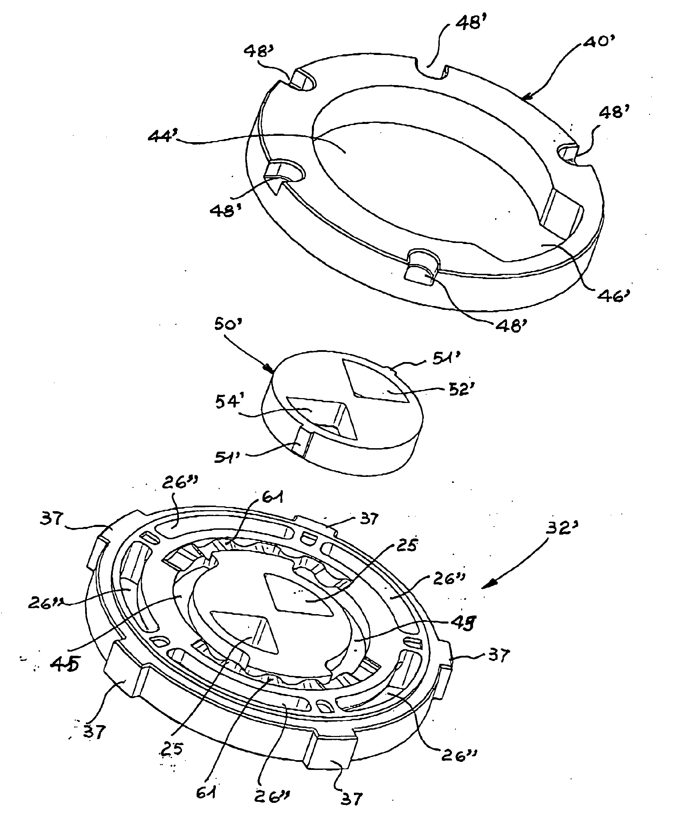

Near the slots 45, on the first small plate 32', at least an arc of a circle notched sector 61 is obtained; in the preferred embodiment of figure 12, there are two notched sectors 61 opposite between them and obtained on the upper side of the plate 32', i.e. in an opposite and isolated position with respect to the ducts 14' and 16' and they are obtained in an intermediate position between the above-mentioned slots 45 and shaped openings 26".

Said sectors 61 secure in a pre-fixed position obtained after rotation, the unit or assembly adjusting the water flow and temperature and some resilient elements 103, schematised in figure 11 of any suitable kind engage therein.

The second small plate, marked with 40', is overlapped to the first small plate 32' as to which it has the same external diameter and it is similarly made of ceramic material; as in the previously described embodiment, said second small plate is provided with a central pass-through opening marked with 44', forming the housing seat for a third small plate 50' described here below.

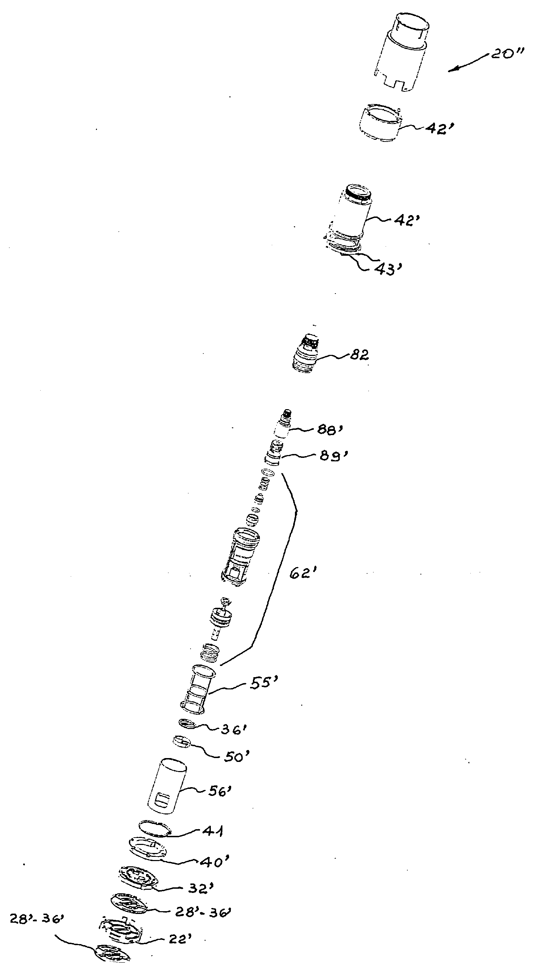

The central opening 44' of the second small plate 40' is generally circular-shaped for a considerable part of its development whose surface is interrupted and widened by an extension 46' protruding towards the edge of the same small plate in order to form an opening similar to the one marked with 46 in the previous embodiment. In comparison with said previous embodiment, also the second small plate 40' comprise a plurality of equidistant recesses marked with 48' along its external edge engaging with a substantially bell-shaped cylindrical body 42' with varied diameters wherein along the lower base correspondent projections 43' are jointly obtained as shown in figure 13.

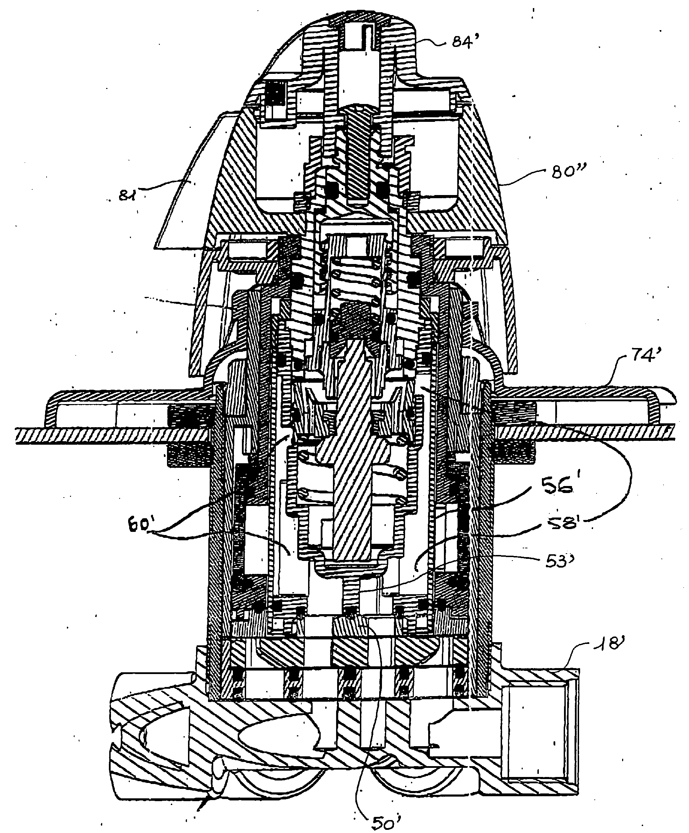

The third small plate 50' is sized in such a way to rotate in the opening 44' of the second small plate 40' wherein it is placed in order to open, close and/or adjust the warm and cold water flow getting in from the ducts 14 or 16. Said third small plate 50' is provided in its centre with two openings 52'-54' and of diametrically opposite protrusions and/or recesses 51' obtained along its external edge for the engagement with operation means made of the hollow cylindrical body or tubular element 53' described in detail here below. The diameter of the third small plate 50' is slightly lower than the one of the opening 44' wherein it is placed and, as in the previous embodiment, it houses the base of a tubular body 56' developing in height up to the upper mouthpiece of the cylindrical body 42'. The tubular body 56' defines and delimits, in its inner part, two coupled ducts 58', 60' shown in figure 17.

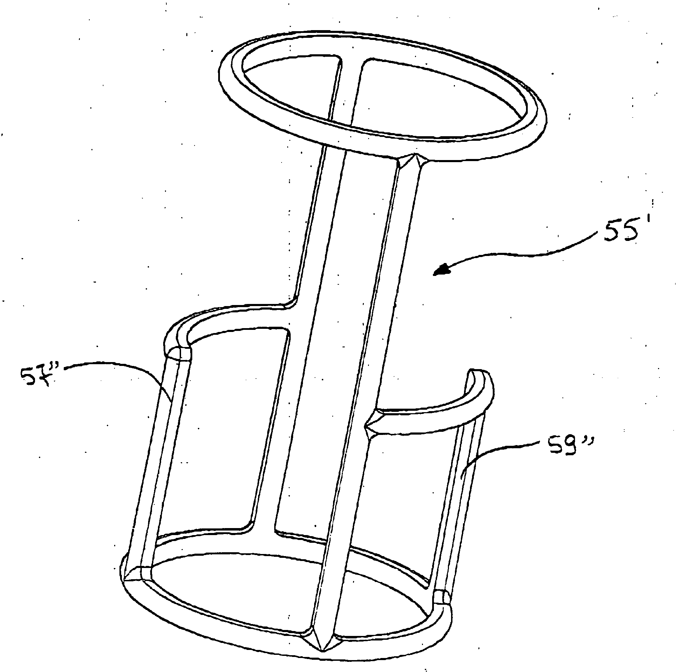

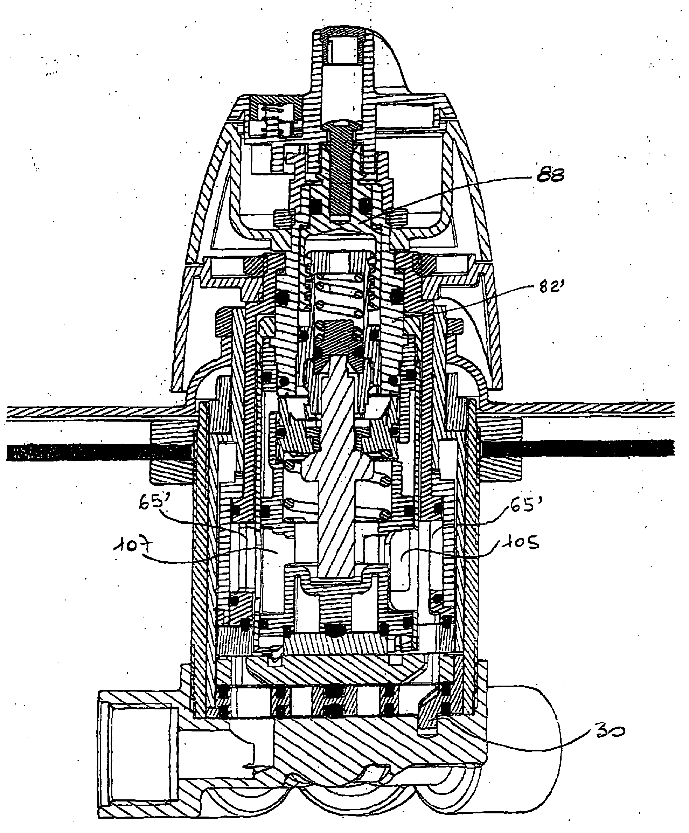

The element 53' is made of a cylindrical body externally provided with a shaped seat 55' with two rings 57 vertically connected between them in opposite positions and provided also with two vertical sectors 57" and 59" (figure 16) opposite between them; said sectors separate the two cold and warm water ducts 58' and 60' of figure 17 from the outlets marked in figure 18 with 105 and 107 of the mixed water reaching the delivery chamber. The latter is marked with 65' in figure 18.

The body 53' houses, in its central part, the thermostatic valve 62' which is known in itself, comprising a known mixing valve 64' operated by a bulb 66' fastened to said mixing valve with a nut 68' or the like. In an appropriate miter, a toric ring or seal 70' is fitted on the same valve 64' that separates the warm water from the cold one outside the same valve; in comparison with the previously described embodiment, the valve is overturned, i.e. its rod (marked with 88' in figure 10) engages with the mobile component 89' of the thermostatic valve 62' to adjust temperature. A locking ring 21' fastened by thread to the body 12' closes and stabilizes the cartridge marked in its whole with 20" in figures 10 and 11.

The operation knobs, marked with 76', 80" and 84' are coupled to the tap 10' in the same way as in the previously described embodiment, or they are singularly fastened with known means to the operation means of the cartridge 20".

The knob 84' integrates a safety lock at the temperature of 38°C which is substantially similar to the previously described one.

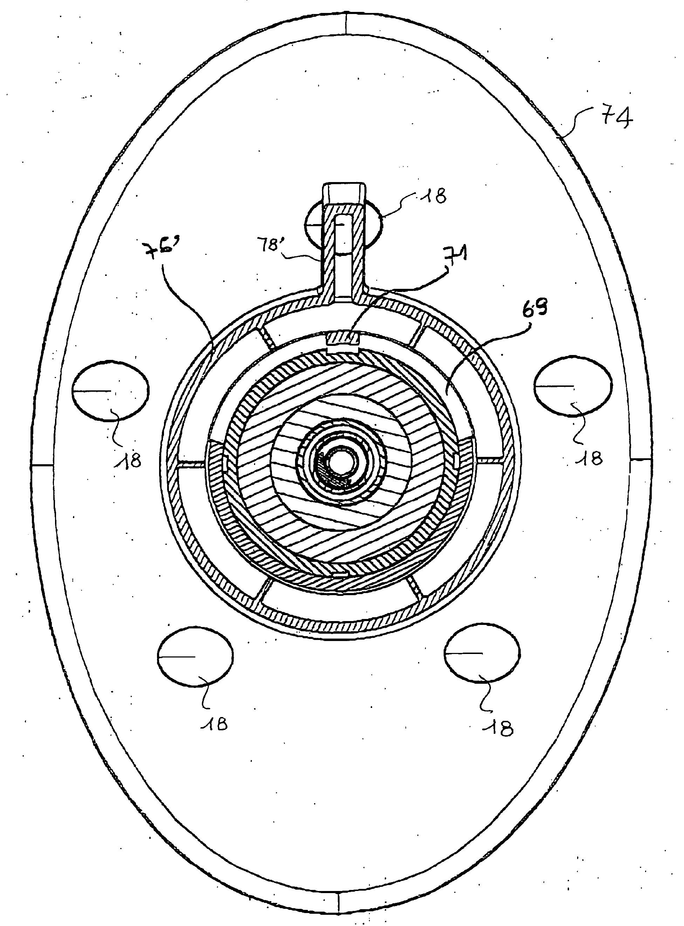

A sector ring 69 that interacts with a correspondent pin 71 jointly obtained with the knob 76' or inserted, is associated to the lower diameter upper end of the cartridge 20" by known means that are for instance made by a broaching; this advantageously allows to previously select or shut the number of the outlets corresponding to the various uses, for example three instead of 5 (as schematised in figure 19).

Conventional and appropriate known antifriction means can be placed among the rotating elements of the cartridge 20" in order to easy the rotation; moreover, the seals placed on the basis of the cartridge 22", marked with 28 and 36' in the first embodiment described, can be separated between them as schematised with 28' and 36' in figure 14. The seal 36' is identical to the one of the first embodiment and keeps the waters separate between the openings 52' and 54' of the small plate 50' and the cylindrical body 53'.

As it can be noticed from the previously description, the advantages obtained by the present invention are clear.

The multifunction tap of the present invention integrates delivery, flow adjustment, mixing and water temperature functions together with flow divertion to the pre-selected use or uses. Therefore additional components or devices that would make the unit and the installation difficult, lead to increase in costs and, moreover they don't look attractive.

In an alternative embodiment, the body 12 with plate 74 and knobs 76'-80"-84 is fastened to the wall of the shower cabin with the flange 111 and the base support 17 is fastened to the body 12 with a fixed coupling (for example a key) and pulled against the body 12 by screws setting on a second flange 111' threaded on the body 12, so that the installer does not need to disassemble, assemble and calibrate the temperature adjusting knob.

Even though the present invention has been described with reference to some embodiments that are given only by way of non-limitative example, some changes and variants can be made by people skilled in the art; it is therefore clear that the present invention is meant to include all the changes and variants falling within the spirit and the protection scope of the appended claims.

## Claims

1. A multifunction tap (10, 10') that can be installed to the downstream water supply and particularly suitable for shower cabins with spouts or multiple nozzles placed in different points and at different heights, **characterized in that** it comprises a bell-shaped body (12,12') provided with independent ducts (14-16), (14'-16') respectively for the inlet of cold and warm water from the water system and of two or more mixed water outlet ducts (18, 18') whose flow can be adjusted, the water can be used for various, alternative or partially simultaneous purposes related to said spouts or multiple nozzles, said tap also integrates further mixing and thermostatic means (62-64), (62'-64') to adjust the temperature of the delivered water.

2. The multifunction tap according to claim 1, **characterized in that** in the body (12) or (12') a cartridge (20) or (20') is coaxially placed, its bottom element (20') being provided with central pass-through openings (24, 24') in communication with the ducts (14-16), (14'-16') and with two or more pass-through openings (26) placed in a radial way and corresponding to the outlet ducts (18) of the mixed water, in said cartridge (20) or (20") a plurality of ceramic material or ceramized plate-shaped means having a substantially circular base (32-40-50) or (32'-40'-50') that cooperate among them and can be moved in reciprocal rotation are inserted.

3. The multifunction tap according to the previous claims, **characterized in that** said plate-shaped means (32, 32') are made of a first small plate in contact with the internal side of the base (22, 22') of the cartridge (20, 20"), provided with one or more vertical recesses (34) or notches (37) in its external part matching with projections (35) or seats (39) formed in the same cartridge, said first plate being provided with central and external openings (24'-26', 25,26") and of one or more shaped slots (96-45) externally formed as to the openings (24'-25) delimiting the rotation of the cylindrical body 53 and 53'.

4. The tap according to the previous claims, **characterized in that** it comprises resilient elements 103 integral to the body 53' that fit into notched sectors 61 of the first small plate 32' and secure in a predefined position the third small plate 50' the water temperature and the flow adjusting means are connected to.

5. The tap according to the previous claims, **characterized in that** said plate-shaped means (40-40') are made of a second small plate, overlapped to the first one (32-32'), provided in its central part with a wide circular-shaped opening (44-44') and externally with a shaped opening (46-46'), the edge of said second plate (40-40') being shaped and provided with recesses (48-48') to house and engage a cylindrical body (42-42') with varied diameters whose lower mouthpiece shows correspondent projections (43-43').

6. The tap according to any of the previous claims, **characterized in that** said plate-shaped means (50-50') are made of a third small plate being rotatingly placed in the central circular opening (44-44') of the second small plate (40-40'), provided in its central part with two openings (52-54), (52'-54') and externally with one or more projections (51, 51') engaging in correspondent recesses of a hollow cylindrical body (53-53') inserted in the cartridge (20-20"), said third plate (50-50') being externally delimited by the base of a tubular body (56-56') fitted to said hollow cylindrical body (53-53').

7. The tap according to any of the previous claims, **characterized in that** a seal (55-55') with two vertically connected rings (57) and/or vertical sectors (57"-59") are associated to the hollow cylindrical body (53-53') and abut in correspondent miters of the same body (53-53'), said body being also provided with opposite and vertically extended shaped recesses housing the connection branches of said rings (57) and/or vertical sectors (57"-59").

8. The tap according to any of the previous claims, **characterized in that** the tubular body (56-56') delimits two coupled and separated ducts (58-60), (58'-60') and two opposite mixed water outlets (105 and 107) in its inner part, in the same body (53-53') being placed said water mixing and adjustment temperature means (62-64), (62'-64') that are respectively made of a thermostatic valve and by a mixing valve operated by a bulb (66-66') fastened with a nut (68-68').

9. The tap according to any of the previous claims, **characterized in that** the mixing valve (64-64') is provided with a miter for a seal (70-70') along the external side surface.

10. The tap according to any of the previous claims, **characterized in that** a lid (72) and/or a locking ring (21-21') are associated to the upper part of the cartridge (20-20"), on said lid (72) or cartridge (20") being fitted a cap (74-74') overlapped by a first knob (76-76') connected to the upper mouthpiece of the cylindrical body (42-42') and provided with at least an integral protruding appendix (78-78') and with a pin (71) interacting with a sector ring (69) associated to the lower diameter upper end of the cartridge (20").

11. The tap according to any of the previous claims, **characterized in that** it comprises a second knob (80-80'), provided with at least an integral protruding projection (80'-81), overlapped to the first knob (76-76') and fitted to a compaction element (82-82') of the thermostatic valve (62-62'), said element (82-82') being engaged with the hollow cylindrical body (53-53') by thread or broaching or equivalent means.

12. The tap according to any of the previous claims, **characterized in that** it comprises a third and overlapping knob (84-84') fastened to an operation lever (88-88') by a screw (86-86') and integrated into the compaction element (82-82') being in its turn fastened to the mobile component (89-89') of the thermostatic valve (62-62'), said third knob being graduated and comprising an anti-rotation safety lock made of a shaped ring (95) cooperating with a pin (90) tensioned by a spring (92) through a button (94).

13. The tap according to any of the previous claims, **characterized in that** the lower mouthpiece of the hollow cylindrical body (53-53') is provided with opposite pins (98-98') of the rotation lock that engage in the shaped slots (96-45) of the first small plate (32-32') and of resilient means (103) engaging in notched sectors (61) of the same plate.

14. The tap according to any of the previous claims, **characterized in that** the openings (26-24') - (24"-27) of the cartridge (20-20") are provided with a seal (28-36)- (28'-36'), on the external side of the base (22) or plate (22') of the same cartridge, at least one projection (30) or equivalent means being obtained and matching with a correspondent recess obtained in the base of the body (12-17).

15. A tap according to any of the previous claims, **characterized in that** said seals (28-36) - (28'-36') are respectively placed on the internal side of the base (22-22") of the cartridge (20-20") among the openings (24-26) - (24"-27) and the openings (24'-26') - (25-26") of the first small plate (32-32').

16. A tap according to any of the previous claims, **characterized in that** it comprises seals (41-41') between the second small plate (40-40') and the cylindrical body (42-42') and a seal (36) between the passages (52-54) - (52'-54') of the plate (50-50') and the ducts (58-60) - (58'-60') of the tubular element (53-53').

17. A tap according to any of the previous claims, **characterized in that** the base support (17) with the inlets (14'-16') and the outlets (18') can be detached and secured to the body (12) by screws and flange (11).
